Europäisches Patentamt

(19) **European Patent Office**

**Office européen des brevets**

(11) Veröffentlichungsnummer: **0 071 788**
**B1**

(12) # EUROPÄISCHE PATENTSCHRIFT

(45) Veröffentlichungstag der Patentschrift:
10.10.84

(51) Int. Cl.³: **C 08 K 3/02**, C 08 K 9/10,
C 08 L 77/00

(21) Anmeldenummer: **82106329.4**

(22) Anmeldetag: **15.07.82**

(54) **Flammfeste Polyamid-Formmassen.**

(30) Priorität: **07.08.81 DE 3131447**

(43) Veröffentlichungstag der Anmeldung:
**16.02.83 Patentblatt 83/7**

(45) Bekanntmachung des Hinweises auf die Patenterteilung:
**10.10.84 Patentblatt 84/41**

(84) Benannte Vertragsstaaten:
**CH DE FR GB IT LI NL**

(56) Entgegenhaltungen:
**EP - A - 0 000 540**
**DE - B - 2 625 673**
**FR - A - 2 232 306**

(73) Patentinhaber: **BASF Aktiengesellschaft,**
**Carl-Bosch-Strasse 38, D-6700 Ludwigshafen (DE)**

(72) Erfinder: **Theysohn, Rainer, Dr., Am Bruch 38,**
**D-6710 Frankenthal (DE)**
Erfinder: **Nieberle, Juergen, Dr., Prager Strasse 23,**
**D-6700 Ludwigshafen (DE)**
Erfinder: **Peters, Karl-Clemens, Dr.,**
**Otto-Schmidt-Gross-Strasse 4, D-6702 Bad Duerkheim**
**(DE)**
Erfinder: **Zahradnik, Franz, Dr., Schwedlerstrasse 120,**
**D-6700 Ludwigshafen (DE)**

BUNDESDRUCKEREI BERLIN

## Beschreibung

Die Erfindung betrifft flammfeste thermoplastische Polyamid-Formmassen, die als Flammschutzmittel eine Mischung aus rotem Phosphor und einem Trägerharz enthalten.

Es ist bekannt, daß roter Phosphor ein wirksames Flammschutzmittel für verstärkte und unverstärkte Polyamid-Formmassen ist. Ein wesentlicher Vorteil des Phosphors gegenüber üblichen Flammschutzmitteln auf Basis von Halogenverbindungen liegt darin, daß er die elektrischen Eigenschaften der Polyamid-Formmassen, insbesondere die Kriechstromfestigkeit, kaum beeinträchtigt.

Feinpulvriger roter Phosphor neigt jedoch bekanntlich bei Reibung oder Kontakt mit heißen Metallflächen zu Staubexplosionen, so daß bei der Handhabung aufwendige Vorsichtsmaßnahmen getroffen werden müssen. Außerdem kann der Phosphor — insbesondere bei erhöhten Temperaturen und über längere Zeiträume hinweg — disproportionieren oder oxidieren, wobei Phosphorwasserstoff und Sauerstoffsäuren des Phosphors gebildet werden. Letztere können zur Bildung von elektrisch leitenden Belägen führen.

Es wurden nun schon verschiedene Maßnahmen vorgeschlagen, mit denen diesen Erscheinungen entgegengewirkt werden soll. Am vielversprechendsten erscheint die Einbettung des Phosphors in ein Trägerharz. Derartige Flammschutzmittelkonzentrate sind staubfrei, rieselfähig und schlagunempfindlich, bei der Einarbeitung in das Polyamid umhüllt das Trägerharz den Phosphor und schützt ihn gegen den Kontakt mit Luft und vor hoher Scherung.

In den DE-OS 2 625 673, 2 625 691 und 2 734 103 wird die Verwendung von Phenol-Formaldehyd-Harzen als Trägerharz empfohlen. Es hat sich aber gezeigt, daß Phenolharze die Kriechstromfestigkeit von Polyamidformmassen herabsetzen, so daß diese für manche Anwendungszwecke, vor allem zur Herstellung von Formteilen für die Elektroindustrie, nur beschränkt eingesetzt werden können.

Der Erfindung lag also die Aufgabe zugrunde, Trägerharze für roten Phosphor zu finden, welche die Kriechstromfestigkeit von Polyamid-Formmassen nicht herabsetzen. Derartige Trägerharze sind Phenol-Isobutyraldehyd-Novolake und Cyclohexanonharze.

Gegenstand der Erfindung sind demzufolge flammfeste, thermoplastische Polyamidformmassen, die als Flammschutzmittel 4 bis 20 Gew.-% einer Mischung aus

A. 10 bis 90 Gew.-% rotem Phosphor und
B$_1$. 90 bis 10 Gew.-% eines Phenol-Isobutyraldehyd-Novolaks oder
B$_2$. 90 bis 10 Gew.-% eines Cyclohexanonharzes enthalten.

Die Harze haben einen Schmelzbereich von etwa 80 bis 120°C; bei 150 bis 200°C sind sie so niedrigviskos, daß der Phosphor ohne nennenswerte Scherung eingerührt werden kann. Sie haben ein hohes Aufnahmevermögen für Phosphor und sie sind thermisch so stabil, daß sie sich bei der Verarbeitung der Formmassen nicht zersetzen, und daß sie aus der Polyamid-Formmasse nicht auswandern. Das Konzentrat aus Trägerharz und Phosphor ist spröde, so daß es leicht verschuppt oder gebrochen werden kann. Wesentlich ist, daß die Harze die mechanischen Eigenschaften und die Kriechstromfestigkeit der Polyamid-Formmassen nicht wesentlich verschlechtern.

Polyamide im Sinne der Erfindung sind vorzugsweise gesättigte, lineare Homopolyamide, wie z. B.

Polycaprolactam(Polyamid-6),
Polyhexamethylenadipinsäureamid
(Polyamid-6,6),
Polyhexamethylensebazinsäureamid,
Polylaurinlactam, Polyundecanamid;

ferner Homo- und Copolyamide, die unter Verwendung von

Adipinsäure, Acelainsäure, Sebazinsäure,
Dodecandisäure, Terephthalsäure einerseits und

Hexamethylendiamin,
Trimethylhexamethylendiamin,
Bis-(4-aminocyclohexyl)—methan,
2,2-Bis-(4'-aminocyclohexyl)-propan andererseits hergestellt werden; sowie Copolyamide, die durch Polykondensation von Lactamen zusammen mit den oben genannten Dicarbonsäuren und Diaminen erhalten werden; außerdem Mischungen aus den genannten Polyamiden.

Die Formmassen enthalten 4 bis 20, vorzugsweise 8 bis 15 Gew.-% des Flammschutzmittelkonzentrats. Dieses besteht aus 10 bis 90, vorzugsweise 50 bis 80 Gew.-% Phosphor und 90 bis 10, vorzugsweise 50 bis 20 Gew.-% des Trägerharzes.

Es wird ein handelsüblicher roter Phosphor verwendet, der vorstabilisiert und/oder phlegmatisiert sein kann. Die mittlere Größe der Phosphorpartikel liegt vorzugsweise zwischen 0,001 und 0,2 mm.

Als Trägerharz wird entweder ein Phenol-Isobutyraldehyd-Novolak oder ein Cyclohexanonharz eingesetzt. Phenol-Isobutyraldehyd-Novolake sind Polykondensationsprodukte aus Phenol und Isobutyraldehyd, vorzugsweise im Molverhältnis 0,5 : 1 bis 1,5 : 1, insbesondere von 0,6 : 1 bis 1 : 1, mit einem Molekulargewicht von etwa 300 bis 1200, insbesondere von 500 bis 800. Sie können in untergeordneten Mengen auch andere Aldehyde, wie Formaldehyd, sowie substituierte Phenole einkondensiert enthalten. Ihre Herstellung ist beispielsweise in der DE-OS 2 805 763, sowie in der deutschen Patentanmeldung P 30 39 360.3 beschrieben. Die Harze sind im allgemeinen wasserunlöslich, jedoch in Toluol und Aceton löslich.

Cyclohexanonharze sind Kondensationsprodukte aus Cyclohexanon, allein oder im Gemisch mit Methylcyclohexanon und Formaldehyd. Ihr Molekulargewicht liegt bei etwa 500 bis 1000. Sie sind beispielsweise in der Monographie »Lack-Kunstharze« von H. Wagner und H. F. Sarx, C. Hanser Verlag, 5. Auflage, Seiten 83/84 beschrieben.

Neben dem Flammschutzmittel können die Polyamid-Formmassen noch andere übliche Zusatzstoffe enthalten. Zu nennen sind hier vor allem Metalloxide, -hydroxyde und -carbonate, welche die Bildung von Phosphorwasserstoff aus dem Phosphor verhindern sollen. In Frage kommen dabei vorzugsweise die Oxide von Magnesium, Aluminium, Zink und Cadium, bevorzugt in Mengen von 0,1 bis 10 Gew.-%, bezogen auf die Formmassen.

Weiter übliche Zusatzstoffe sind Pigmente zum Überdecken der Eigenfarbe des roten Phosphors, ferner Verarbeitungshilfsmittel, Stabilisatoren sowie Füllstoffe. Als Füllstoffe kommen vorzugsweise Glasfasern in Frage, die mit einer Schlichte und einem Haftvermittler ausgerüstet sein können. Die Fasern können einen Durchmesser zwischen 6 und 20 µm aufweisen, die mittlere Glasfaserlänge im Spritzgußteil liegt vorzugsweise zwischen 0,08 und 0,5 mm. Als weitere Füllstoffe, die ebenfalls mit einem Haftvermittler beschichtet sein können, kommen Silikate, wie Talkum, Glimmer, Kaolin, calc. Kaolin, Zirkonsilikat in Frage, ferner Glaskugeln, Wollastonit, Quarzmehl und Kreide sowie Mischungen von Glasfasern mit Füllstoffen. Die Füllstoffe werden in Mengen von 10 bis 50 Gew.-%, bezogen auf die Polyamid-Formmasse, eingesetzt. Die Flammschutzmittel, sowie die anderen Zusatzstoffe werden mit bekannten Verarbeitungsmaschinen, z. B. Extrudern oder anderen Knet- und Mischvorrichtungen, in die Polyamid-Schmelze eingearbeitet.

Die erfindungsgemäßen Polyamid-Formmassen eignen sich zur Herstellung von Formteilen, insbesondere von solchen, die auf dem Elektrosektor eingesetzt werden.

Die in den Beispielen genannten Teile und Prozente beziehen sich auf das Gewicht.

## Beispiele

Herstellung der Flammschutzmittelkonzentrate

A. 400 g eines Phenol-Isobutyraldehyd-Novolaks mit dem Molverhältnis 0,9 : 1 und einem mittleren Molgewicht von 720 wurden in einem Glasgefäß aufgeschmolzen und die Schmelze auf 150°C gebracht. In die gerührte Schmelze wurden 600 g handelsüblicher Phosphor mit einer mittleren Korngröße von 35 µm eingebracht, wobei die Temperatur konstant gehalten wurde. Nach beendeter Zugabe wurde 5 min nachgerührt und die Schmelze auf ein Aluminiumblech gegossen. Nach dem Abkühlen wurde die Masse zu Teilchen von ca. 5—8 mm Durchmesser und ca. 2—3 mm Dicke gebrochen.

B. Es wurde wie in A. verfahren, mit dem Unterschied, daß ein Cyclohexanonharz mit einem mittleren Molgewicht von 900 und einem Erweichungspunkt von 115°C verwendet wurde.

C. Es wurde wie in A. verfahren, mit dem Unterschied, daß ein Phenol-Formaldehyd-Novolak (Coreforte CE5211 der BASF AG) eingesetzt wurde.

## Beispiel 1

60 Gewichtsteile Polyamid 6.6 mit einer relativen Viskosität $\eta_{rel}$ von 2,7 wurden auf einen Zweischneckenextruder vom Typ ZSK der Fa. Werner und Pfleiderer, Stuttgart, aufgeschmolzen. Durch eine Öffnung, die sich stromabwärts befand, wurden 30 Gew.-Teile Glasfasern mit einem Durchmesser von 14 µm und einer Schnittlänge von 6 mm sowie 10 Gewichtsteile Konzentrat A zugegeben. die schmelzflüssige Mischung wurde in Strängen aus der Maschine ausgetragen, in Wasser gekühlt, granuliert und getrocknet. Aus den Granulaten wurden bei 280°C jeweils Formkörper spritzgegossen, an denen die Kriechstromfestigkeit nach DIN 53480, die Schlagzähigkeit nach DIN 53454 und die Biegefestigkeit nach DIN 53452 bestimmt wurden.

## Beispiel 2

Es wurde wie in Beispiel 1 verfahren, mit dem Unterschied, daß Flammschutzmittelkonzentrat gemäß B eingesetzt wurde.

## Beispiel 3

(Vergleichsbeispiel)

Es wurde wie in Beispiel 1 verfahren, mit dem Unterschied, daß Flammschutzmittelkonzentrat gemäß C eingesetzt wurde.

| Beispiel | Biege-festigkeit [Nmm$^{-2}$] | Schlag-zähigkeit [kJm$^{-2}$] | Kriechstrom-festigkeit [V] | |
|---|---|---|---|---|
| | | | KB | KC |
| 1 | 271 | 39,8 | 475 | 425 |
| 2 | 273 | 42,7 | 500 | 425 |
| 3 | 250 | 26,6 | 350 | 300 |

## Patentanspruch

Flammfeste thermoplastische Polyamid-Formmassen, die als Flammschutzmittel 4 bis 20 Gew.-% einer Mischung aus

A. 10 bis 90 Gew.-% rotem Phosphor und

B. 90 bis 10 Gew.-% eines Trägerharzes

enthalten, dadurch gekennzeichnet, daß das Trägerharz entweder

$B_1$. ein Phenol-Isobutyraldehyd-Novolak oder
$B_2$. ein Cyclohexanonharz ist.

**Claim**

Flame-retardant thermoplastic polyamide moulding compositions containing, as flame retardant, 4 to 20% by weight of a mixture of

(A) 10 to 90% by weight of red phosphorus, and
(B) 90 to 10% by weight of a carrier resin,

wherein the carrier resin is either

$(B_1)$ a phenol-isobutyraldehyde novolak, or
$(B_2)$ a cyclohexanone resin.

**Revendication**

Masses de moulage polyamides thermoplastiques, résistant aux flammes, qui contiennent, comme agent retardant les flammes, 4 à 20% en poids d'un mélange de

A.   10 à 90% en poids de phosphore rouge, et
B.   90 à 10% en poids d'un résine support,

caractérisées par le fait que la résine support est

$B_1$   une novolaque phénol-isobutyraldéhyde, ou
$B_2$   une résine cyclohexanone.